# EUROPEAN PATENT APPLICATION

(11) **EP 0 977 343 A1**
(43) Date of publication of application: **02.02.2000**
(21) Application number: 98911048.1
(22) Date of filing: 26.03.1998
(51) Int. Cl.: H02K 21/14

(54) **PERMANENT MAGNET GENERATOR**

(30) Priority: 31.03.1997 JP 9803297
(71) Applicant: Fukada, Mitsuhiro, Tokyo 141-0021 (JP)
(72) Inventor: Fukada, Mitsuhiro, Tokyo 141-0021 (JP)
(74) Representative: Harding, Richard Patrick
(86) International application number: JP9801383
(87) International publication number: WO9844620

(57) **Abstract**

Permanent magnetic dynamo comprises a permanent magnetic rotor 1 formed as an inner tubular member integrally provided on a center axle 2 via drive blades 3 and allows a natural energy medium 4 passing therethrough and a diamagnetic stator 10 formed as an outer tubular member provided with bearing members 11 that support the center axle 2 are attached to the diamagnetic stator 10, so that a predetrmined interval 12 formed between the outer circumferential wall of the permanent magnetic rotor 1 and the diamagnetic stator 10, having a stator winding 16, in order to capable of generating electricity so that the permanent magnetic dynamo is able to generate electricity by the use of weak natural power, and the weight of the dynamo can be reduced. Moreover, the permanent magnetic dynamo is suitable for the use of putting it into a river or sea around a camp site in case where water power of natural energy is used.

## Description

### FIELD OF THE INVENTION

The present invention relates to a permanent magnetic dynamo which can generate electricity by the use of natural energy such as water power (including wave power) or force of a wind. The permanent magnetic dynamo can be prevented to happen to a cogging phenomenon (the revolving with a trembling caused by an attracted phenomenon of the magnetic force when a motor starts), and it is able to lighten. Moreover, this permanent magnetic dynamo is used for putting it into a river or sea when water power of natural energy is utilized. On the other hand, this permanent magnetic dynamo is used for attaching to a support, support base, or roof of building when force of a wind of natural energy is utilized.

### BACKGROUND OF THE INVENTION

The structure of the dynamo (three-phase motor, for example) consists of a stator to produce a revolving magnetic field, a rotor, and a bearing which can maintain the rotoras to leave a fixed intevals into the stator. For example, concerning a dynamo can be used natural energy of water power or force of a wind, when the rotor which is supported by a bearing having a center axle revolves into the tubular stator with a stator winding, electricity is made to be generated at the stator winding. The electricity generated at the stator winding passes therethrough collector rings or brushes connected to a resister or condenser.

Because the stator has usuary a duty of a magnet, it comprises an iron core which can easily pass a magnetic flux and a stator winding to make electromagnet. In this case, the iron core of the stator is wound thin silicon steel plate around thereat in order to prevent to lose energy by a vortex electric current. On the other hand, the rotoras well as the stator comprises an iron core wound thin silicon steel plate around thereat and a rotor conductor. The rotor conductor has a structure that copper rods are respectively driven into each of a plurality of grooves formed at a circumferential of the rotor iron core, and the short circuit rings are blazed or welded at both ends of each of copper rods.

The iron core as above-mentioned causes the cogging phenomenon, so called, to a stator iron core. As a result, a large starting torque (electromotive force) as peculiarity of a dynamo or motor is required.

Therefore, the cogging phenomenon is obstacle to generate electricity, in case where it genarates electricity, by weak natural energy (water power or wind power) is used to genarate electricity in obedience to an environmental condition.

Then, concerning the conventional dynamo used to the stator or rotor having of the iron cores (stator iron core, rotor core), the technique which objects to decrease or to reduce electromotive force is proposed (Toku-kai-hei No.6-14509 official report, Toku-kai-hei No.7-184360 official report).

In the first embodiment which had disclosed on Toku-kai-hei No.7-184360, it disclosed as "A dynamo comprises an annular magnet (rotor) disposed Nouth and South poles mutually to the direction of rotation and a stator (generative coil housing ) have annular coil therein with projections (yoke projection) formed of the silicon steel plate as many poles as the rotor into the annular magnet, and slits are formed on the projections to the same direction of projection as respectively to decrease the electromotive force on the projection".

However, though electromotive force is made to be able to decrease by the above-mentioned dynamo, there is the fault whose dynamo is heavy as the whole from the point of a structure since the stator wound silicon steel plate is maintained in the center axle by the bearing.

Accordingly, the objects of a permanent magnetic dynamo of the present invention are provided as follows:

### REMARK

1. A permanent magnetic dynamo is capable of using, even though natural energy is weak, concerning the case that it is put into a river or attached to a support base, for example.
2. The weight of dynamo can be reduced, so that, it can be conveyed easily.
3. It can be made a stator winding long.
4. The running cost does not be taken, and a dynamo can be manufactured with a low price.
5. The size of a dynamo can be small.
6. A dynamo can be got the advantages by reason that the stator is not made of iron. The advantages are these points, that is, the inductance is small, there is no iron loss, or there is no magnetic absorptivity to the rotor.

### DISCLOSURE OF THE INVENTION

The present invention (invention described in claim 1) is a permanent magnetic dynamo comprising: a permanent magnet rotor 1 formed as an inner tubular member; and a diamagnetic stator 10 formed as an outer tubular member. The permanennt magnetic rotor 1 is integrally provided on a center axle 2 via drive blades 3 and allows a natural energy medium 4 to pass therethrough. Bearing members 11 that support the center axle 2 are attached to the diamagnetic stator 10, so that a predetermained interval 12 is formed between the outer circumferential of the permanent magnetic rotor 1 and the diamagnetic stator 10. The diamagnetic stator 10 has a stator winding 16 wound around conductor attachment portions 13. Accordingly, the permanent magnetic dynamo does not require a large starting torque (electromotive force), and the weight of the dynamo can be reduced.

The present invention (invention described in claim 3) is a permanent magnetic dynamo comprising: a permanent magnet rotor 1A formed as an inner tubular member; and a diamagnetic stator 10A formed as an outer tubular member. The permanent magnetic rotor 1A is integrally provided on a center axle 2A via drive blades 3A and allows a natural energy medium 4 to pass therethrough. Bearing members 11 that support the center axle 2A are attached to the diamagnetic stator 10A, so that a predetermined interval 12 is formed between the outer circumferential of the permanent magnetic rotor 1A and the diamagnetic stator 10A. The diamagnetic stator 10A has a stator winding 16 wound around conductor attachment portions 13. The permanent magnetic rotor 1A also comprises an inner sleeve 6 integrally provided on the center axle 2A via the drive blades 3A and a plurality of permanent magnets 1a...1n which are disposed on the outer circumferential wall of the inner sleeve 6 such that alternating N-poles and S-poles are arranged circumferential in an annular shape. Accodingly, in this permanent magnetic dynamo, the structure member (the center axle, the drive blades, and the inner sleeve) of the rotor can be formed integrally.

The present invention (invention described in claim 4) is a permanent magnetic dynamo comprising: a permanent magnet rotor 1B formed as an inner tubular member; and a diamagnetic stator 10B formed as an outer tubular member. The permanennt magnetic rotor 1B is integrally provided on a center axle 2B via drive blades 3B and allows a natural energy medium 4 to pass therethrough. Bearing members 11B that support the center axle 2B are attached to the diamagnetic stator 10B, so that a predetermined interval 12 is formed between the outer circumferential of the permanent magnetic rotor 1B and the diamagnetic stator 10B. The diamagnetic stator 10B has a stator winding 16B wound around conductor attachment portions 13. One end of the center axle 2B is projected from the bearing member 11B located on one side, and a propeller-shapeed second drive blade 7 is attached to the projected end. Acccordingly, in this permanent magnetic dynamo, the permanent magnetic rotor can rotate easily even when the wind force is weak. Further, the permanent magnetic dyanmo can be installed at a desired place (e.g., the stator is suitably fixed to a support base at a camp site).

The present invention (invention described in claim 5) is a permanent magnetic dynamo comprising: a permanent magnet rotor 1C formed as an inner tubular member; and a diamagnetic stator 10C formed as an outer tubular member. The permanennt magnetic rotor 1C is integrally provided on a center axle 2C via drive blades 3C and allows a natural energy medium 4 to pass therethrough. Bearing members 11C that support the center axle 2C are attached to the diamagnetic stator 10C, so that a predetermined interval 12 is formed between the outer circumferential of the permanent magnetic rotor 1C and the diamagnetic stator 10C. The diamagnetic stator 10C has a stator winding 16C wound around ground conductor attachment portions 13. One end of the center axle 2C is projected from the bearing member 11C located on one side. The projected end portion is fixedly provided an outer sleeve 8 for drive purpose that is made of iron and rotates together with the permanent magnetic rotor 1C in the same direction. Accordingly, in this permanent magnetic dynamo, the amount of electricity genarated by the stator winding can increased.

The present invention (invention described in claim 6) is a permanent magnetic dynamo comprising: a permanent magnetic dynamo body 30 which further comprises a permanent magnet rotor 1 formed as an inner tubular member and a diamagnetic stator 10D formed as an outer tubular member. The permanennt magnetic rotor 1 is integrally provided on a center axle 2 via drive blades 3 and allows a natural energy medium 4 to pass therethrough. Bearing members 11C that support the center axle 2 are attached to the diamagnetic stator 10D, so that a predetermined interval 12 is formed between the outer circumferential of the permanent magnetic rotor 1 and the diamagnetic stator 10D. The diamagnetic stator 10D has a stator winding 16D wound around conductor attachment portions 13D. At least one rudder 31 is provided on the stator 10D. Further, the permanent magnetic dyanmo body 30 has an arm-shapeed support member 32 for support the stator 10D via a shaft such that the stator 10D can slide freely. Thus the stator 10D rotates to follow the wind direction. Accordingly, the permanent megnetic dynamo is stable for installation on the roof of a building, for example, at an ordinary home.

Finaly, the present invention (invention discribed in claim 7) is a permanent magnetic dynamo comprising: a plurality of permanent magnetic rotors 1E formed as an inner tubular member; and a long diamagnetic stator 10E formed as an outer tubular member. Each of the permanent magnetic rotors 1E is integrally provided on a long center axle 2E via drive blades 3 and allowa a natural energy medium 4 to pass therethrough. Bearing members 11 that support the center axle 2E are attached to the diamagnetic stator 10E, so that a predetermined interval 12 is formed between the outer circumferential walls of the permanent magnetic rotor 1E and the diamagnetic stator 10E. The diamagnetic stator 10E has a stator winding 16E wound around each of a plurality of conductor attachment portions 13E provided to correspond to the positions of the respective permanent magnetic rotors 1E. Accordingly, this permanent magnetic dynamo is suitable for the case where a large amount of electricity is required to be taken out.

In relation to the object of the present invention of prevention of cogging phenomenon, the term "diamagnetic material" used herein means feeble magnetic substance (substance contains little magnetic substance) that is lighter than iron, regardless of whether the substance is a nonferrous metal (such as titanium or stainless steel) or a nonmetallic substance (such as synthetic resin, ceramics, cloth, or paper). Also, the term "natural energy medium" used herein mean water and wind. Moreover, the term "natural power (natural energy)" used herein means water power or wind power.

### BRIEF DESCRIPTION OF THE DRAWINGS

Fig.1 is a perspective view showing a first embodiment of the present invention;
Fig.2 is an exploded explanation view of a structure member showing Fig.1;
Fig.3 is a left side view of Fig.1;
Fig.4 is a schematic cross-sectional explanation view showing at axial direction of Fig.1;
Fig.5 is a schematic cross-sectional explanation view showing at radius direction of Fig.1;
Fig.6 is an explanation view in use;
Fig.7 is an explanation view for working showing a first embodiment of the present invention;
Fig.8 is a schematic cross-sectional explanation view showing a second embodiment of the present invention (the same drawing of Fig.)4;
Fig.9 is an exploded explanation view of a structure member showing a second embodiment (the same drawing of Fig.2);
Fig.10 is a schematic cross-sectional explanation view showing a third embodiment of the present invention;
Fig.11 is a perspective view showing a third embodiment of the present invention;
Fig.12 is a schematic cross-sectional explanation view showing a fourth embodiment of the present invention;
Fig.13 is a exploded perspective view showing a fourth embodiment of the present invention;
Fig.14 is a schematic cross-sectional explanation view showing a embodiment of the present invention;
Fig.15 is a perspective view showing a fifth embodiment of the present invention;
Fig.16 is a schematic cross-sectional explanation view showing a sixth embodiment of the present invention; and
Fig.17 is a perspective view showing a sixth embodiment of the present invention.

### BEST MODE OF THE INVENTION

Preferred embodiments of the present invention are described in more detail below referring to the accompanying drawings.

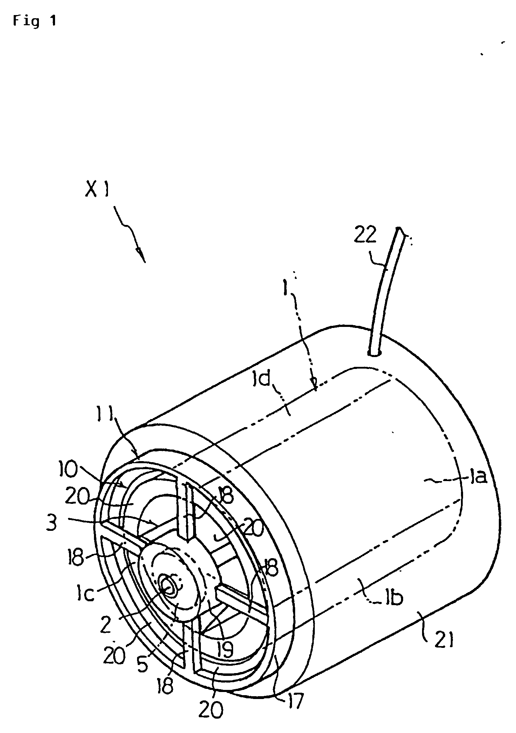

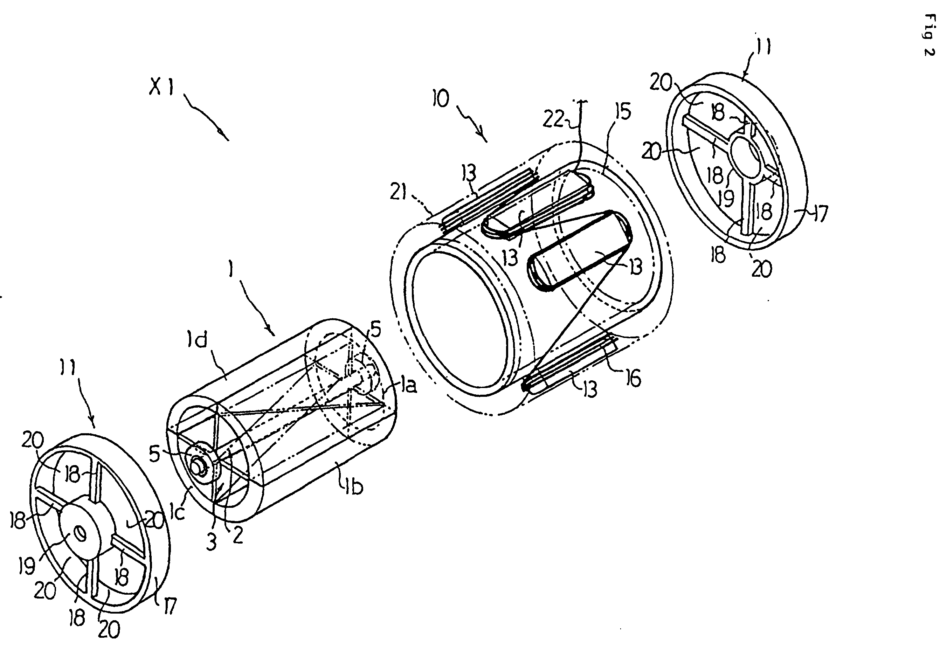

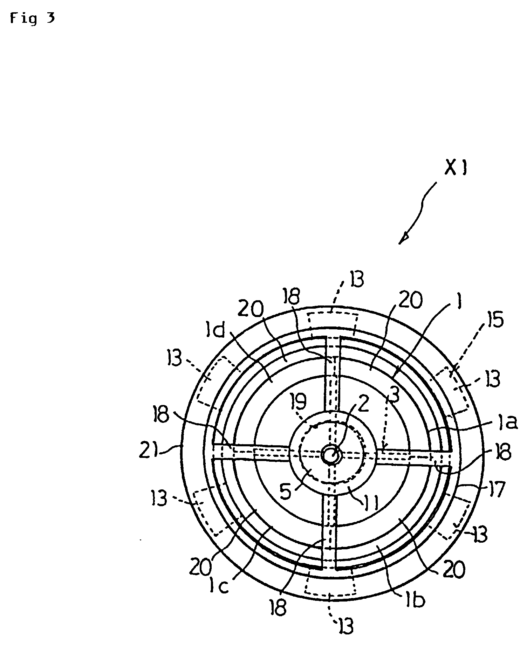

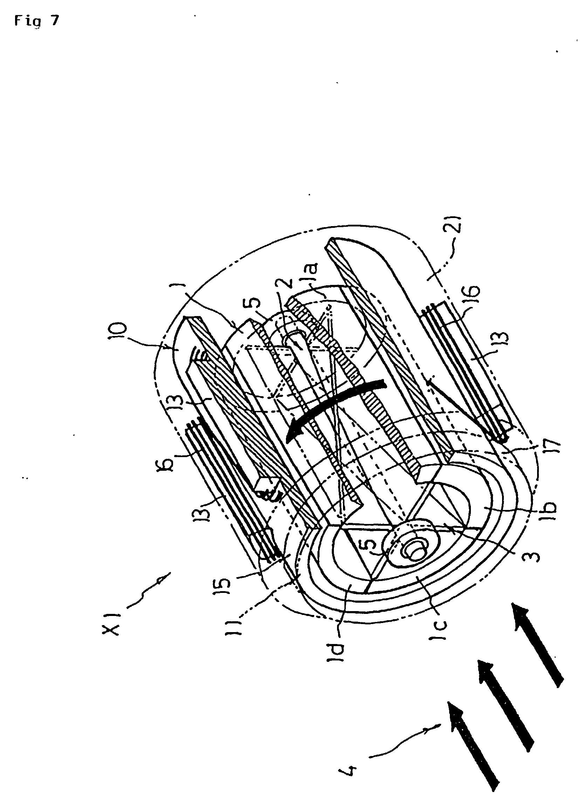

Figs. 1 to 7 illustrate a first embodiment of a permanent magnetic dynamo X1. The permanent magnetic dyanmo X1 in this embodiment is proper for the use of water power, especially, of netural energy.

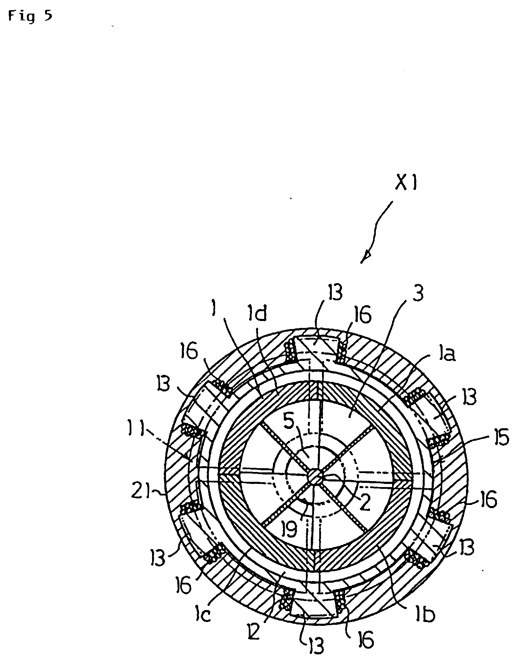

A permanent magnetic rotor 1 formed as an inner tubular member is integrally provided on a center axle 2 via drive blades 3 and allows a naturalenergy medium 4 (water is desirable) to pass therethrough. The permanet magnetic rotor 1 comprises four permanent magnets 1a, 1b, 1c, and 1d disposed N-poles and S-poles mutually to the direction of rotation. Therefour, each of permanent magnets 1a, 1b, 1c, or 1d as shown in Fig. 5 is formed curved with the same bending ratio as to be tubular magnetic conbined housing. The number of magnet could be selected the optional number including two, three,or five pieces thereof. The center axle 2 and drive blades 3 are formed of hard synthetic resin. The permanent magnetic rotor 1 is formed externally as a short tubular member, while it may be formed as a long tubular member.

The center axle 2 and drive blade 3 are formed of lighter mateial (synthetic resin for example) in due consideration of the weight of the permanent magnetic dynamo X1. The length of the center axle 2 is longer a little than that of the short tubular permanent magnetic rotor 1, both ends, which project from the permanent magnetic rotor 1, of the axle 2 are provided ball bearings 5, 5 to each end thereof.

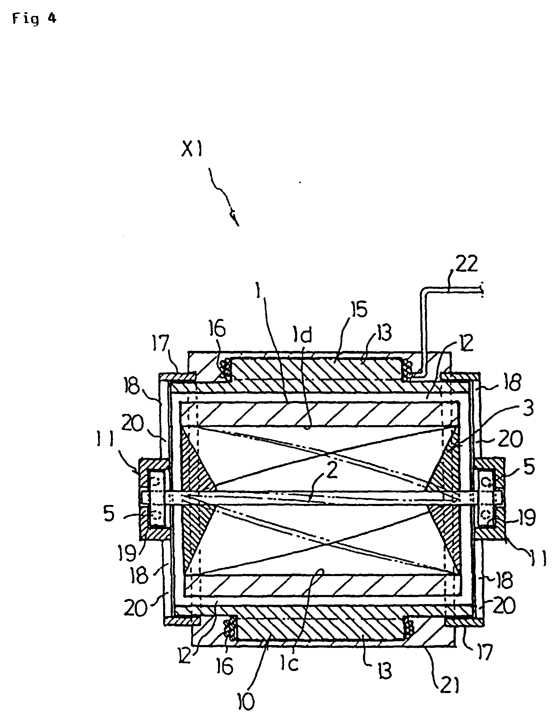

Also, the drive blade 3 is formed as to drive (revolve) so that the inner tubular permanent rotor 1 allows a natural energy medium 4 (water currnt) to pass therethrough. In this embodiment, the drive blades 3 have four blades thereof, for example, the drive blades 3 extend from one end portion of the permanent magnetic rotor 1 to another end thereof with curving as shown in Figs. 4 and 5. Moreover, each of drive blades 3 is integrally provided on the center axle 2 and permanent magnetic rotor 1 at fourty five degrees intervals.

Next, an outer tubular stator 10 formed of synthetic resin is provided as to leave a predetermined interval 12 between an outer circumferential of the permanent magnetic rotor 1 and the stator 10 with a pair of bearing members 11, 11 that support the center axle 2, with stator windings 16 (generating coils) wound around a plurality of conductor attachment portions 13. The stator 10 in this embodiment is formed of sythetic resin to prevent the cogging phenomenon of the permanent magnetic dynamo X1 to the utmost. The stator 10 may be formed of various materials including titanium, stainless steel, ceramics, hard paper, or cloth. Theouter tubular stator 10 comprises a stator body 15 provided a conductor attachment portions 13 on an outside circumferential thereof, extending in a length direction and a stator winding 16 wound around the conductor attachment portions 13.

Moreover, the bearing members 11 comprise an annular circumferential fuselage part 17 which fits outwardly to an end of an outer circumferential of the stator 10, a plurality of support arms 18 integrally extended to the radius direction from the body part 17, a center fitting part 19 for ball bearing supported by the support arms 18 and a plurality of passing holes 20 capable of allowing the natural energy medium 4 to pass therethrough, formed by the center fitting portions 19 and support arms 18.

The conductor attachment portions 13 in this embodiment has six pieces thereof, having no connection with the number of poles of the permanent magnets 1a, 1b, 1c, and 1d. Each of conductor attchment portions 13 is spaced uniformly projected to the outer circumferential of the stator 10, and the stator winding 16 is wound around each of conductor attchment portions 13. In this case, the conductor attachment portions 13 may be provided to the bottom of inner wall at dent formed with the outer circumferential of the stator 10 or provided to an inner circumferential wall of the stator 10.

A shield cover 21 covers the whole of the stator 10 in cooperation with the bearing members 11, 11. Then the shield cover 21 has an opening for a terminal, for guiding a cord which connected with the stator winding 16.

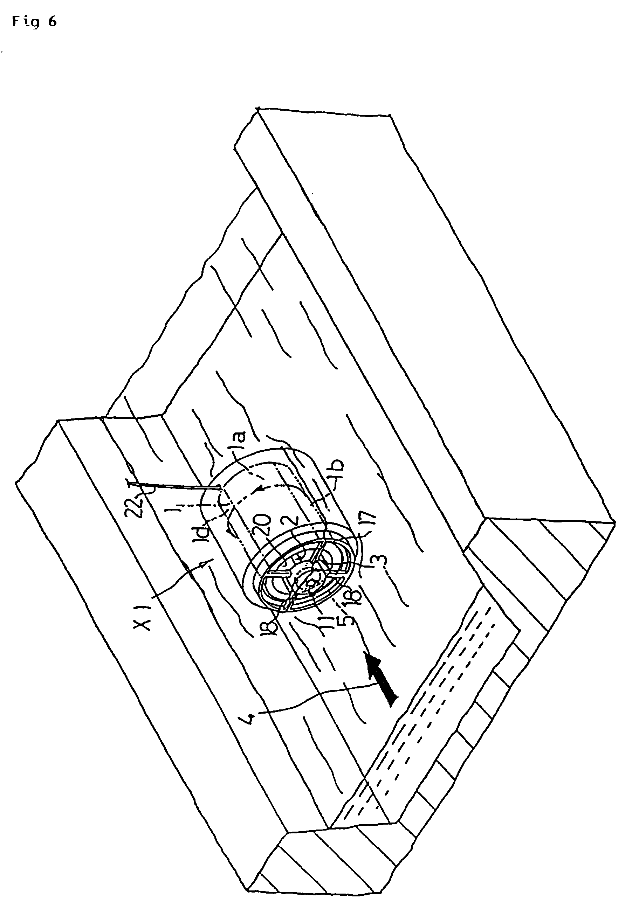

Concerning with above structure, as shown in Figs. 6 to 7, when the permanent magnetic dynamo X1 puts into a river R around a camp site, the drive blades 3 catch an energy of water current 4 that passes therethrough inside the permanent magnetic rotor 1 to one way via the passing holes 20, even though the current of river is slow (in case of weak natural power), then the center axle 2 revolves. Therefore, the permanent magnetic rotor 1 revolves with the center axle 2 and drive blades 3 together. As a result,since the magnetic field of the permanent magnetic rotor 1 cut across to the stator winding 16 of the stator 10, the caused voltage products, and it can be teken out electricity from the stator winding 16.

### OTHER EMBODIMENT OF THE INVENTION

Other embodiments of the pesent invention will now be described including the contents of the first embodiment of the present invention. Through the drawings of the embodiments, like components are denoted by like numerals as of the first embodiment and will not be further explained. The statores 10A to 10E also have diamagnetic bodies.

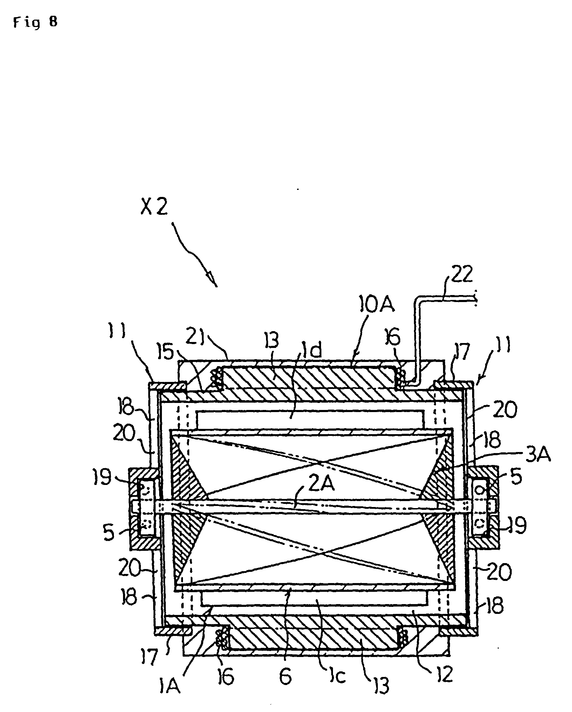

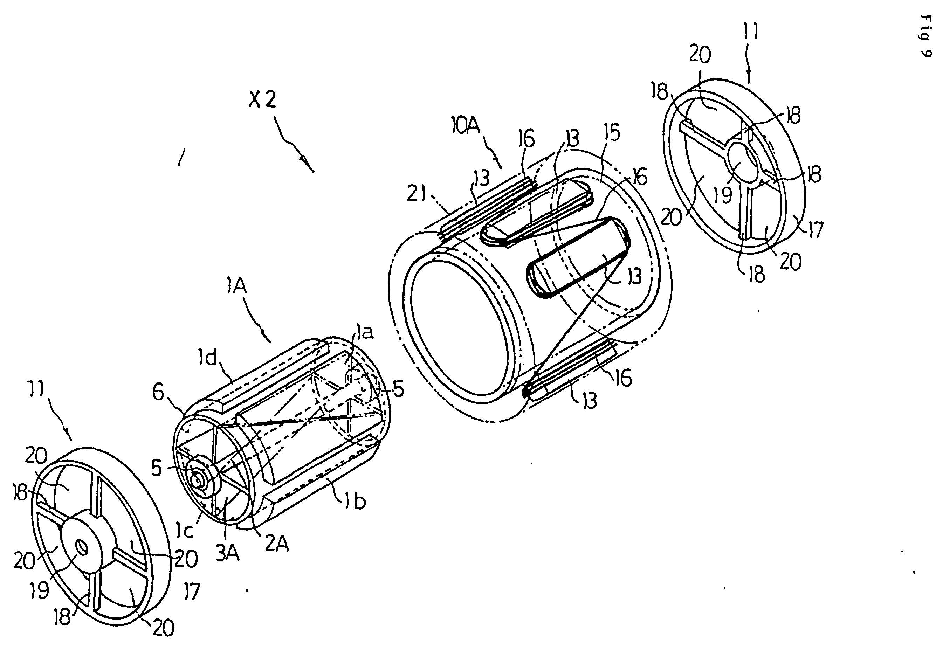

At first, Figs. 8 and 9 illustrate a permanent magnetic dynamo X2 showing a second embodiment of the present invention which is distinguished from the first embodiment by the fact that a permanent magnetic rotor 1A formed as an inner tubular comprises an inner sleeve 6 formed of synthetic resin and a plurality of permanent magnets 1a, 1b, 1c, and 1d...1n disposed on the outer circumferential wall of the inner sleeve 6 such thst alternating N-poles and S-poles arranged circumferential in an annular shape to the diection of rotation. Also, the center axle 2 and drive blades 3 are made of synthetic resin, moreover, the mark 10A shows a stator made of synthetic resin.

Therefore, this permanent magnetic rotor 1A is fixedly provided a center axle 2A via drive blades 3A. Although the plurality of permanent magnets 1a,1b,1c, and 1d simillar to the first embodiment may be formed with an annular magnetic conbined body integrally, each of permanent magnet 1a, 1b, 1c, or 1d is annular disposd to the inner sleeve 6 at a given distance.

Thus the center axle 2A, drive blades 3A, and inner sleeve 6 can be integrally formed of materials such as synthetic resin or ceramics. Therefore,it is easy to produce a permanent magnetic rotor 1A.

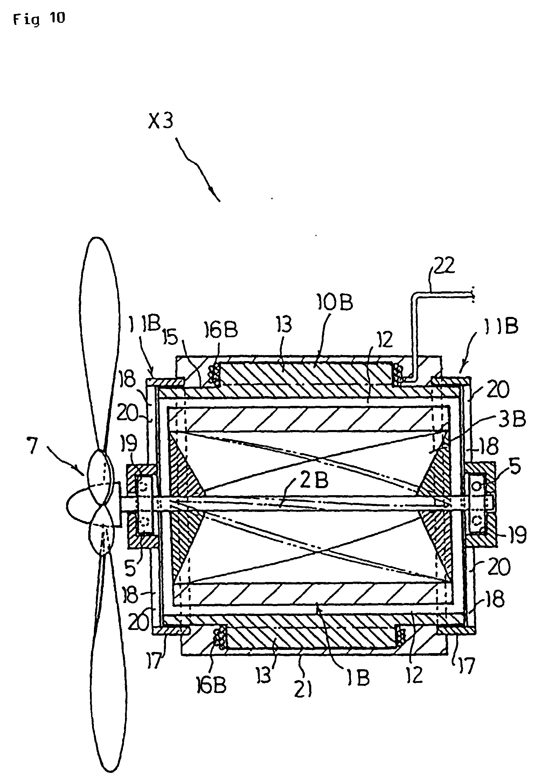

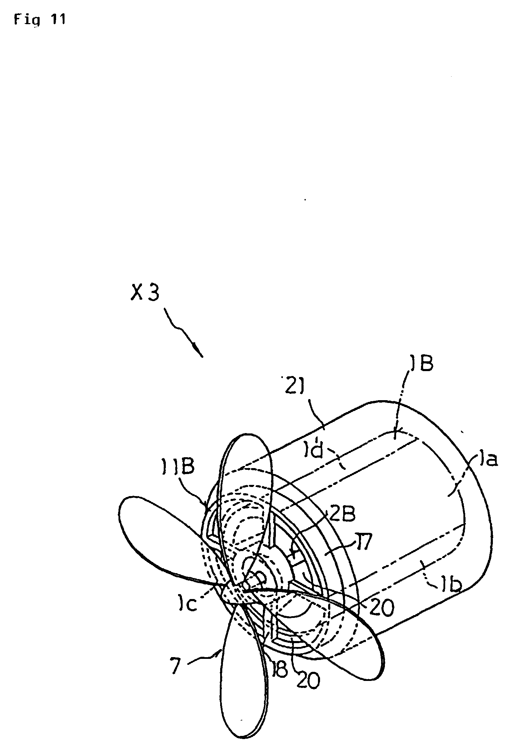

Next, Figs. 10 and 11 illustrate a permanent magnetic dynamo X3 showing a third embodiment of the present invention which is distinguished from the first embodiment by the fact that one end of the center axle 2B is projected from one side of bearing members 11B, and a propeller-shaped second drive blade 7 is attached to the projected end portion thereof. The mark 10B shows a stator made of synthetic resin.

Then, since both of the first drive blades 3B and second drive blade 7 can catch force of a wind in the case that natural energy is used by wind, the permanent magnetic rotor 1B can be revolved easily. Therefore, even though natural energy is weak, electricityis generated with the stator winding 16B by an electromagnetic induction without the cogging phenomenon.

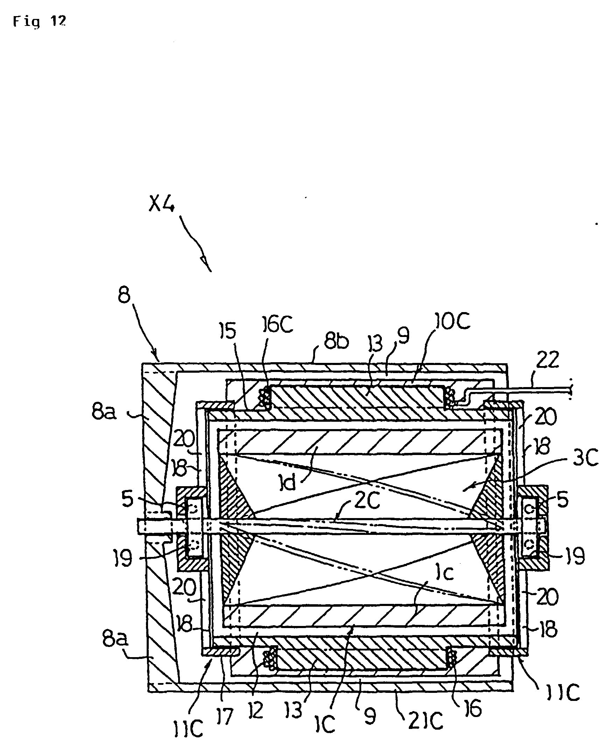

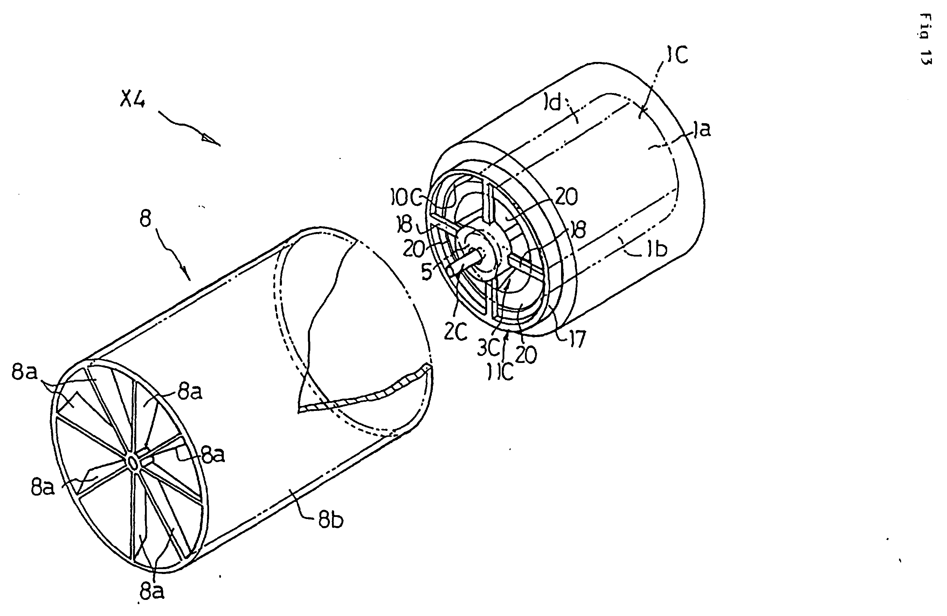

Also, Figs. 12 and 13 illustrate a permanent magnetic dynamo X4 showing a fourth embodiment of the present invention which is distinguished from the first embodiment by the fact that one end of a center axle 2C is projected from at least one side of bearing members 11C, and an outer sleeve (member) 8 for drive purpose is fixedly provided to the projected end thereof. Then, the mark 10C shows a stator formed of synthetic resin, and this stator is fixedto a prop or roof by the support arm with no reference drawing.

The outer sleeve 8 for drive purpose comprises eight pieces of rotor blades 8a fixed the center axle 2C to an inner end thereof and an outer tubular body 8b made of iron which is integrally provided to the outer end portion of the rotor blades 8a. Therefore, the outer tubular body 8b made of iron is integrally provided to the center axle 2C via the rotor blades 8a and rotates togetherwith the permanent magnetic rotor 1C in the same direction.

Then, the rotor blades 8a are formed properly in the shape of a screw as to revolve easily the outer sleeve 8 for drive purpose by force of a wind. Also, the second predetermined interval 9 is provided between the inner circumferential of the outer tubular body 8b made of iron and a shield cover 21C. On the other hand, the rotor blades 8a may be fixed to the projected back end portion (other end portion) of the center axle 2C.

Since both of first drive blades 3C and rotor blades 8a of the outer tubular housing 8 for drive purpose can catch force of a wind in the case that natural energy is wind, the permanent magnetic rotor 1C revolves easily by driving power of both of driving (revolving) blades 8a and 3C. In addition, since the outer tubular body 8b of the outer sleeve 8 for drive purpose is made of iron (yoke), the magnetic force is generated strongly between each of the permanent magnet of permanent magnetic rotor 1C and the outer tubular body 8b. As a result, the amount of the generation of electricity increases, and the cogging phenomenon takes happen to lessen.

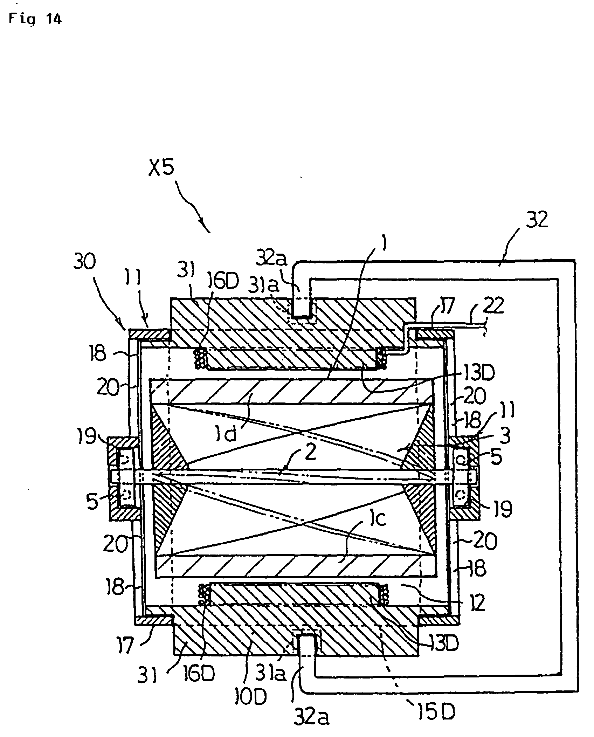

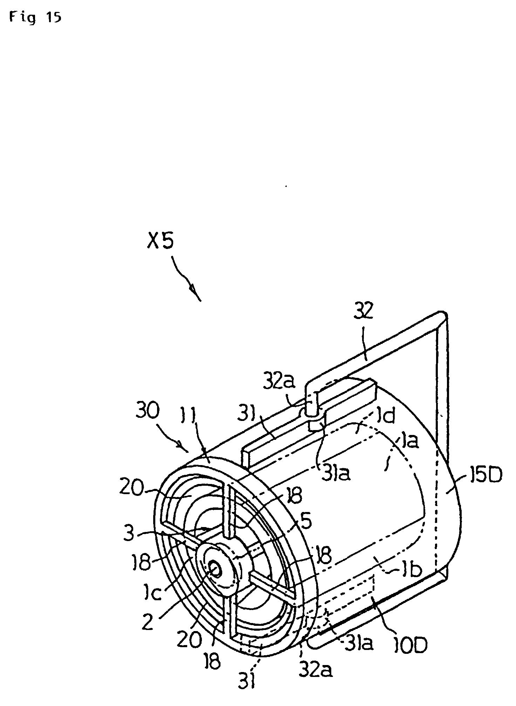

Moreover, Figs. 14 and 15 illustrate a permanent magnetic dynamo X4 showing a fourth embodiment of the present invention which is distinguished from the first embodiment by the fact that one or more rudders 31 are provided directry on a stator 10D of a permanent magnetic dynamo body 30 (permanent magnetic dynamo as well as the first embodiment) or indirectly to the stator 10D thereof via the shield cover 21, and the permanent magnetic dynamo body 30 revolves in horizontal corresponding to the wind direction via an arm-shaped support member 32.

Thus the rudderes 31 are provided projected to the upward and downward on the outer circumferential of a stator body 15D which comprises thestator 10D, formed as an outer tubular member, made of synthetic resin or ceramics to the axial direction, and the support members 32 are formed externally as a rip channel-shaped, both ends 32a, 32a bent to the vertical thereof are pivotally fitting to the bearing parts 31a, 31a provided in substantially central portion of the rudders 31. Then, the stator 10D inthe fifth embodiment formes a conductor attachment portions 13D with the inner circumferential thereof instead of the shield cover. Accordingly, it is different from the permanent magnetic dynamo in the first embodiment that the stator winding 16D inheres as compared to the stator body 15D.

The permanent magnetic dynamo body 30 can be revolved corresponding with the direction of a wind, and it has same effects in the first embodiment.

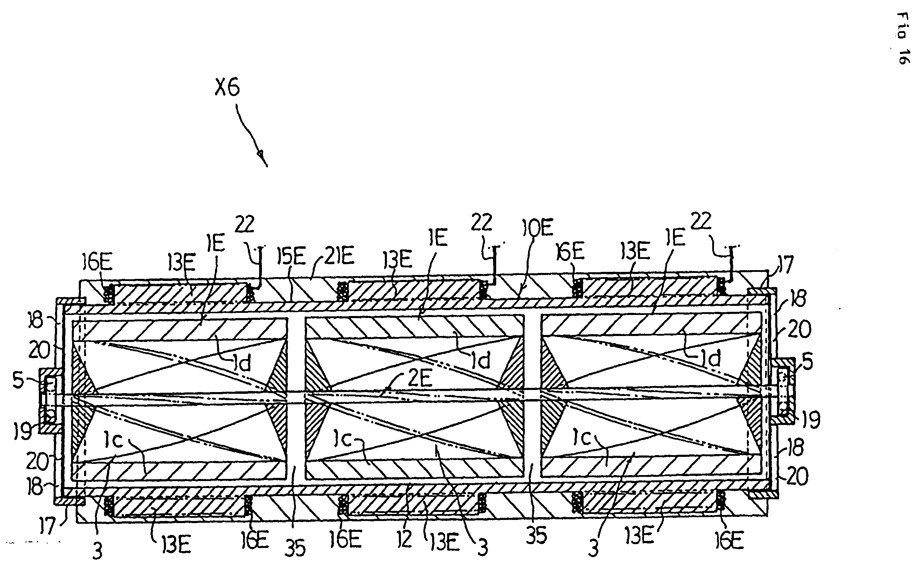

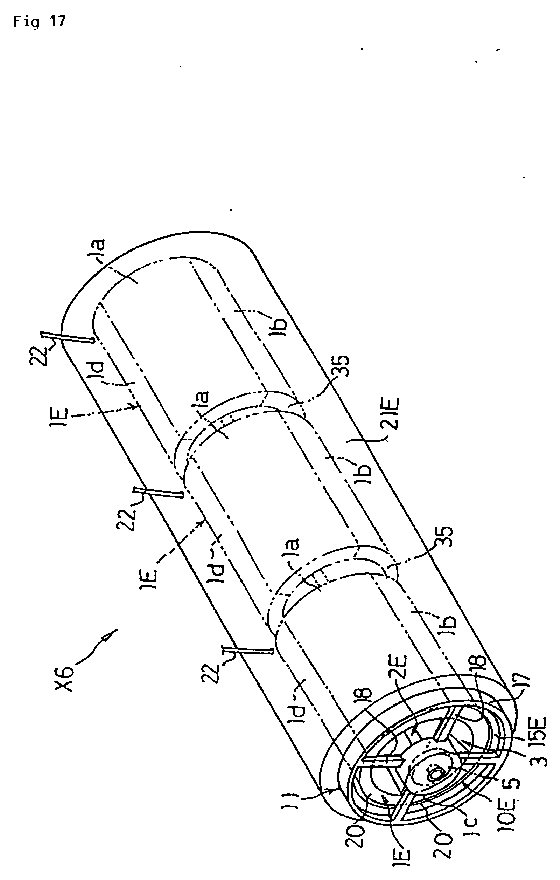

Furthermore, Figs. 16 and 17 illustrate a permanent magnetic dynamo X4 showing a sixth embodiment of the present invention which is distinguished from the first embodiment by the fact that a stator 10E made of synthetic resin as outer tubular body is formed as a long tubular-shaped at least, and a plurality of permanent magnetic rotors 1E are provided in a line into the long tubular stator 10 with the needed intervals 35 to the axial direction via a long center axle 2E.

Accordingly, a shield cover 21E is also formed in the shape of a long tubular member, and the plurality of conductor attachment portions 13E for winding the stator winding 16E formed on the long tubular stator body 15E are provided (in a line for example) to an outer circumferential of the stator body 15E to the axial direction to correspond to the positions of the respective permanent magnetic rotors 1E.

Then the amount of generation of electricity increases in proportion to the number of the permanent magnetic rotors 1E.

### POSSIBILITY ON THE INDUSTRY

As set forth above,since the permanent magnetic dynamo in the present invention is capable of generating, even if naural energy is weak, the happen to a cogging phenomenon is always low, and weight of the dynamo can be redused, the permanent magnetic dynamo is suitable for the use of putting it into river or sea around camping site in case where the permanent magnetic dynamo is used by water power. On the other hand, the permanent magnetic dynamo is suitable for the use to be provided to a prop, support base, roof of building or engine room of vehicle in the case where the permanent magnetic dynamo is used for force of a wind. Moreover, a device for storaging electricity may be worked by using the basic structure disclosed in the first embodiment.

### DESCRIPTION OF NUMBERS

X1, X2, X3, X4, X5, X6: a permanent magnetic dynamo;
1, 1A, 1B, 1C, 1D, 1E: a permanent magnetic rotor;
2, 2A, 2B, 2C, 2D, 2E: a center axle;
3, 3A, 3B, 3C: a drive blade;
4: a natural energy medium;
7: a second drive blade;
8: an outer sleeve for drive purpose;
9: a second predetermined interval;
10, 10A, 10B, 10C, 10D, 10E: a stator
11, 11B, 11C: a bearing member;
12, 35: a predetermined interval
13, 13D, 13E: a conductor attachment portion;
15, 15D, 15E: a stator body;
16, 16B, 16C, 16D: a stator winding; and
21, 21C, 21E: a shield cover.

## Claims

1. A permanent magnetic dynamo comprising;
a permanent magnetic rotor 1 formed as an inner tubular member integrally provided on a center axle 2 via drive blades 3 and allows a natural energy medium 4 passing therethrough; and
a diamagnetic stator 10 formed as an outer tubular member provided with bearing members 11 that support said center axle 2 are attached to said diamagnetic stator 10, so that a predetermined interval 12 formed between the outer circumferential wall of said permanent magnetic rotor 1 and said diamagnetic stator 10, having a stator winding 16 wound around conductor attachment portions 13 thereof.

2. A permanent magnet dynamo according to claim 1, wherein said diamagnetic stator 10 is formed of nonmetaric material.

3. A permanent magnetic dynamo comprising;
a permanent magnetic rotor 1A formed as an inner tubular member integrally provided on a center axle 2A via drive blades 3A and allows a natural energy medium 4 passing therethrough; and
a diamagnetic stator 10A formed as an outer tubular member provided with bearing members 11 that support said center axle 2A are attached to said diamagnetic stator 10A, so that a predetermined interval 12 formed between the outer circumferential wall of said permanent magnetic rotor 1A and said diamagnetic stator 10A, having a stator winding 16 wound around conductor attachment portions 13 thereof; and
said permanent magnetic rotor 1A further comprises an inner sleeve 6 integrally provided on said center axle 2A via said drive blades 3A and a plurality of permanent magnets 1a...1n which are disposed on the outer circumferential wall of said inner sleeve 6 such that alternating N-poles and S-poles are arranged circumferentially in an annular shape.

4. A permanent magnetic dynamo comprising
a permanent magnetic rotor 1B formed as an inner tubular member integrally provided on a center axle 2B via drive blades 3B and allows a natural energy medium 4 passing therethrough;
a diamagnetic stator 10B formed as an outer tubular member provided with bearing members 11B that support said center axle 2B are attached to said diamagnetic stator 10B, so that a predetermined interval 12 formed between the outer circumferential wall of said permanent magnetic rotor 1B and said diamagnetic stator 10B, having a stator winding 16B wound around conductor attachment portions 13 thereof;
one end of said center axle 2B projected from one side of said bearing member 11B; and
a second drive blade 7 in the shape of a propeller attached to the one projected end of said center axle 2B.

5. A permanent magnetic dynamo comprising;
a permanent magnetic rotor 1C formed as an inner tubular member integrally provided on a center axle 2C via drive blades 3C and allows a natural energy medium 4 passing therethrough;
a diamagnetic stator 10C formed as an outer tubular member provided with bearing members 11C that support said center axle 2C are attached to said diamagnetic stator 10C, so that a predetermined interval 12 formed between the outer circumferential wall of said permanent magnetic rotor1C and said diamagnetic stator 10C, having a stator winding 16C wound around conductor attachment portions 13 thereof;
at least one end of said center axle 2C projected from said bearing member 11C located on one side; and
an outer sleeve 8 for drive purpose fixedly provided to said projected end, made of iron, and rotates together with said permanent magnetic rotoe 1C in the same direction.

6. A permanent magnetic dynamo comprising:
a permanent magnetic dynamo body 30 further comprises a permanent magnetic rotor 1 formed as an inner tubular member, integrally provided on a center axle 2 via drive blades 3 and allows a natural energy medium 4 passing therethrough and a diamagnetic stator 10D formed as an outer tubular member provided with bearing members 11 that support said center axle 2 are attached to said diamagnetic stator 10D, so that a predetermined interval 12 formed between an outer circumferential wall of said permanent magnetic rotor 1 and said diamagnetic stator 10D, having a stator winding 16D wound around conductor attachment portions 13D thereof;
at least one rudder 31 provided on said stator 10D; and
said permanent magnetic dynamo body 30 has an arm-shaped support member 32 for supporting said stator 10D via a shaft such that said stator 10D can slide freely.

7. A permanent magnetic dynamo comprising;
a plurarity of permanent magnetic rotors 1E formed as an inner tubular member integrally provided on a long center axle 2E via drive blades 3 and allows a natural energy medium 4 passing therethrough; and
a long diamagnetic stator 10E formed as an outer tubular member provided with bearing members 11 that support said center axle 2E are attached to the diamagnetic stator 10E, so that a predetrmined interval 12 formed between an outer circumferential wall of said permanent magnetic rotor 1E and said diamagnetic stator 10E, having a stator winding 16E wound around each of a conductor attachment portions 13E provided to correspond to the positions of said respective permanent magnetic rotors 1E.
